# EUROPÄISCHE PATENTSCHRIFT

(11) **EP 2 272 652 B1**
(45) Veröffentlichungstag und Bekanntmachung des Hinweises auf die Patenterteilung: **01.05.2013**
(21) Anmeldenummer: 10164957.2
(22) Anmeldetag: 04.06.2010
(51) Int. Cl.: B29C 49/12, B29C 49/78, B29C 49/58, B29C 49/16

(54) **Blasmaschine und Verfahren zum Herstellen von Hohlkörpern**
Blowing machine and method for producing hollow bodies
Souffleuse et procédé de fabrication de corps creux

(30) Priorität: 03.07.2009 DE 102009031681
(43) Veröffentlichungstag der Anmeldung: 12.01.2011
(73) Patentinhaber: Krones AG, 93073 Neutraubling (DE)
(72) Erfinder: Voth, Klaus, 93083 Obertraubling (DE)
(74) Vertreter: Grünecker, Kinkeldey, Stockmair & Schwanhäusser

(56) Entgegenhaltungen:
- US-A- 4 929 450
- US-A1- 2004 155 386

## Beschreibung

Die Erfindung bezieht sich auf eine Blasmaschine und ein Verfahren zum Herstellen von Hohlkörpern der in den Oberbegriffen der Ansprüche 1 und 8 erläuterten Art.

Eine derartige Blasmaschine ist aus der EP 1 328 396 bekannt. Die bekannte Blasmaschine enthält eine geteilte Blasform, in die ein Vorformling eingesetzt wird, der dann mit Hilfe von Druckluft aus einer Blasdüse an die Wände der Blasform angepresst und somit zum Hohlkörper geformt wird. Zum Blasen des Hohlkörpers wird jedoch relativ viel Luft benötigt, wobei der Luftverbrauch insbesondere beim Herstellen von Weithalsgefäßen, also beispielsweise Bechern oder Dosen oder dgl. relativ hoch ist. Bei der Vielzahl der hergestellten Hohlkörper fällt dieser Luftverbrauch doch verfahrenstechnisch und ökonomisch ins Gewicht.

Aus der EP 1 574 318 ist ein Verfahren bekannt, bei dem versucht wird, Blasluft einzusparen, indem man die Blasluftzufuhr abschaltet, bevor der dort verwendete Reckdorn aus der Hohlform zurückgezogen wird. Durch das Abschalten der Blasluft wird das vom Reckdorn vorher eingenommene Volumen nicht mehr mit Luft aufgefüllt, so dass hier kein weiterer Luftbedarf entsteht. Es wurde festgestellt, dass der dadurch bewirkte geringe Druckabfall keine negativen Auswirkungen auf das Blasergebnis hat. Die Einsparung der Blasluft ist jedoch relativ gering.

Aus der US 4 929 450 ist eine Blasmaschine und ein Blassverfahren nach dem Oberbegriff der Ansprüche 1 und 8.

Der Erfindung liegt die Aufgabe zugrunde, eine Blasmaschine und ein Verfahren zum Blasformen von Hohlkörpern bereitzustellen, mit denen Blasluft eingespart werden kann.

Die Aufgabe wird durch die Blasmaschine gemäß Anspruch 1 und das Verfahren gemäß Anspruch 8 gelöst.

Durch die erfindungsgemäße Verwendung eines in den Vorformling beim Blasen einfahrbaren Kolben wird der Innenraum desjenigen Bereiches des Vorformlings, der bereits an der Blasform anliegt, ganz oder zumindest teilweise ausgefüllt, so dass dort keine Blasluft mehr erforderlich ist, um den Blasdruck aufrechtzuerhalten. Auf diese Weise wird ein wesentlich größerer Anteil an Blasluft bereits beim Blasvorgang eingespart.

Vorteilhafte Weiterbildungen der Blasmaschine und des Verfahrens sind den jeweiligen Unteransprüchen zu entnehmen.

Wenn der Außendurchmesser des Kolbens im Wesentlichen dem Hals-Innendurchmesser des Hohlkörpers entspricht, kann er auch die Abdichtung gegen ein Entweichen der Blasluft übernehmen.

Bevorzugt ist der Kolben koaxial zur Blasdüse und darüber hinaus auch koaxial zu einer der Blasdüse zugeordneten Reckstange angeordnet.

Der Kolben wird bevorzugt über eine Nockensteuerung gesteuert.

Bevorzugt ist der Kolben unabhängig von der Blasdüse und unabhängig von einer Reckstange bewegbar.

Die Luftzufuhr durch die Blasdüse und die Bewegung des Kolbens kann so gesteuert werden, dass der Kolben die Blasluft, die sich bereits im Hohlkörper befindet, verdichtet, so dass der Kolben auch zur Druckerhöhung während des Blasens beiträgt.

Wird der Kolben nach dem Erreichen einer ersten Blasdruckstufe eingefahren, so kann durch eine entsprechende Verfahrenssteuerung dafür gesorgt werden, dass der Kolben die Blasluft derart verdichtet, dass eine zweite Druckstufe auch ohne (wesentliche) zusätzliche Blasluftzufuhr erreicht wird, so dass es nicht mehr notwendig ist, der Blasdüse Blasluft mit zwei verschiedenen Druckhöhen zuzuführen. Ist eine Reckstange vorhanden, so wird der Kolben bevorzugt eingefahren, nachdem die Reckstange sein Arbeit getan hat.

Ein Ausführungsbeispiel der Erfindung wird nachfolgend anhand der Zeichnungen näher erläutert. Es zeigen:
- Fig. 1: eine Blasstation einer erfindungsgemäßen Blasmaschine,
- Fig. 2: eine schematische Darstellung der Blasstation vor Beginn der Tätigkeit, und
- Fig. 3: eine schematische Darstellung der Blasstation nach Ende der Tätigkeit.

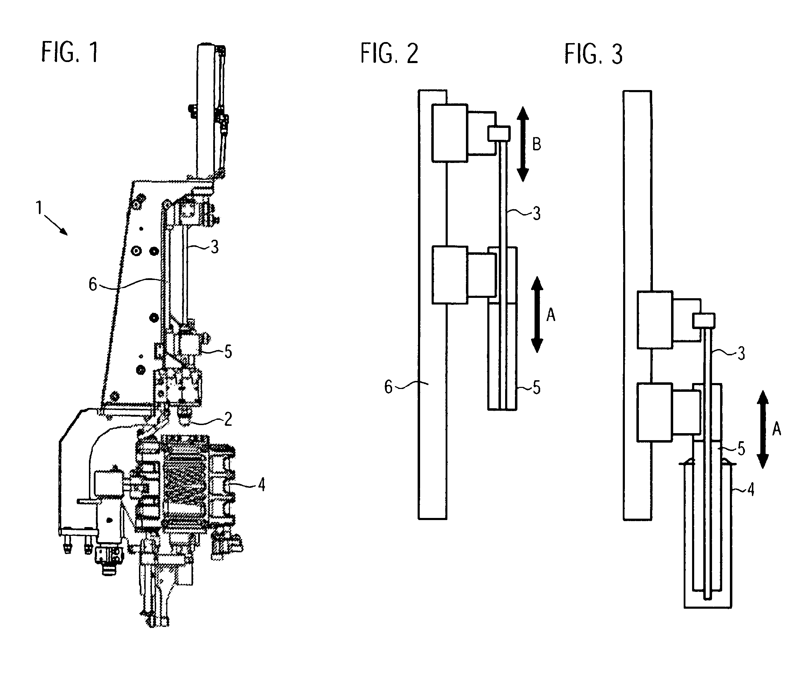

Fig. 1 zeigt eine der Blasstationen 1 einer Blasmaschine, die hier als Streckblasmaschine ausgebildet ist, d.h. neben einer Blasdüse 2 eine Reckstange 3 enthält. Die Reckstange 3 ist üblicherweise koaxial innerhalb der Blasdüse 2 angeordnet und relativ zur Blasdüse 2 bewegbar. Unterhalb der Blasdüse 2 befindet sich eine Blasform 4, in die in üblicher Weise ein hier nicht dargestellter Vorformling eingesetzt und durch Blasen mittels der Blasdüse 2 und einem mechanischen Recken mit Hilfe der 3 zur gewünschten Form an die Innenwände der Blasform 4 angepresst wird.

Die Blasdüse 2 und die Reckstange 3 wird wie üblich über einen Pneumatikzylinder und eine Kurve gesteuert.

Erfindungsgemäß ist außer der Blasdüse 2 und der Reckstange 3 ein Blaskolben 5 vorgesehen. Der Blaskolben 5 ist koaxial zur Blasdüse 2 und zur Reckstange 3 angeordnet und umgibt beide. Der Blaskolben 5 ist jedoch unabhängig von der Reckstange 3 und der Blasdüse 2 bewegbar und, anders als die Reckstange 3, nicht für einen mechanischen Streckkontakt mit dem Bodenbereich des Vorformlings ausgebildet. Die Bewegung des Blaskolbens 5 in Richtung auf die Blasform 4, in die Blasform 4 hinein und von ihr weg wird bevorzugt über eine nicht gezeigte Nockensteuerung erreicht, kann jedoch auch pneumatisch oder elektrisch erfolgen. Der Kolben 5 dient zum zumindest teilweisen Ausfüllen des Innenraums des Vorformlings und hat einen größeren Außendurchmesser als die Reckstange 3 bzw. die Blasdüse 2, der jedoch so bemessen ist, dass der Blaskolben durch den Hals eines Vorformlings hindurch in dessen Inneres eintreten kann. Bei der Herstellung von Weithalsgefäßen, wie beispielsweise Kunststoffdosen oder -becher oder dgl. kann der Kolben einen besonders großen Außendurchmesser erreichen, wodurch seine Wirksamkeit verstärkt wird. Der Durchmesser des Kolbens kann bis zum Innendurchmesser des Halses der Vorformlinge/Gefäße erhöht werden, so dass er auch zur Abdichtung der Halsöffnung beim Blasen beitragen kann. Der Kolben 5 hat bevorzugt eine zylindrische Form mit konstantem Außendurchmesser. Die axiale Länge des Kolbens kann der axialen Länge der Blasform (Höhe des fertigen Hohlkörpers) entsprechen, kann jedoch auch geringfügig größer sein, und aus der Blasform 4 in Endstellung herausragen, kann jedoch auch kleiner sein.

Blasdüse 2, die Reckstange 3 und der Kolben 5 sind an einer gemeinsamen vertikalen Führung 6 angeordnet, die eine strikt koaxiale Bewegung der Blasdüse 2, der Reckstange 3 und des Kolbens 5 in Richtung der Doppelpfeile A sicherstellt.

Zum Herstellen eines Hohlkörpers wird zunächst in üblicher Weise verfahren, d.h. der Vorformling wird in die Blasform 4 eingelegt, und die Blasdüse 2 sowie die Reckstange 3 bewegen sich an und in den Vorformling hinein, wobei durch Einblasen von Blasluft mit dem üblichen Druck (erste Druckstufe) mit Unterstützung der mechanischen Reckung durch die Reckstange, der sich an die Innenwand des Vorformlings im Bereich des späteren Bodens des Hohlkörpers anlegt und diesen streckt, der Vorformling geweitet und gelängt wird. Hat der Vorformling ein ausreichendes Innenvolumen erreicht, so tritt der Kolben 5 in Aktion. Gesteuert durch die Nockensteuerung wird der Kolben durch den Hals des Vorformlings in dessen Inneres hineingefahren. Gleichzeitig stoppt die Reckstange seine Streckbewegung und fährt zurück. Der Kolben nimmt mehr und mehr des Innenraums des Vorformlings ein, so dass dieser dort nicht mit Luft gefüllt werden muss, auch wenn sich das Volumen des Innenraums des Vorformlings durch kontinuierliches Blasen weiter erhöht.

Gleichzeitig kann durch das Einfahren des Kolbens und ein darauf abgestimmtes Blasprogramm der Blasdüse dafür gesorgt werden, dass der Kolben die Blasluft im Inneren des Vorformlings verdichtet, so dass der Kolben darüber hinaus auch zur Druckerhöhung im Inneren des Vorformlings beiträgt, ohne dass zu diesem Zweck die gesamte, bislang zum Erreichen dieses Drucks notwendige Blasluft eingeblasen werden muss.

Dies geht so weit, dass mit dem Blaskolben die Blasluft im Inneren des Vorformlings auf eine zweite Druckstufe angehoben werden kann, so dass diese Druckerhöhung nicht über die Steuerung der Blasluftversorgung über die Blasdüse 2 erfolgen muss. Auf diese Weise kann ein übliches Streckblasen mit Blasdüse, Reckstange und zweistufigem Druckverlauf (P1 und P2) durchgeführt werden, ohne dass Druckluft mit einem zweiten, höheren Druck (P2) zur Verfügung gestellt werden muss.

Selbstverständlich kann die Blasdüse trotzdem zur Druckerhöhung auf P2 beitragen, falls dies aus irgendeinem Grunde erforderlich ist.

Der Durchmesser des Kolbens kann je nach dem verwendeten Vorformling und dem Hohlkörper-Endprodukt gewählt werden, bei einer 0,5 Liter PET-Dose (in der Form der üblichen Blechdosen) kann der Reckkolben einen Außendurchmesser von ca. 50 mm aufweisen, was einer Blaslufteinsparung von ca. 0,29 Liter Blasluft pro Blasvorgang entspricht.

In Abwandlung des beschriebenen und gezeichneten Ausführungsbeispiels kann der erfindungsgemäße Kolben auch bei Blasmaschinen anderer Konstruktion eingesetzt werden. Der Kolben kann jeden gewünschten Durchmesser und jede Länge annehmen, die für den jeweils verwendeten Vorformling zweckmäßig ist.

## Patentansprüche

1. Blasmaschine zum Herstellen von Hohlkörpern, insbesondere Weithalsgefäßen, mit einer Blasdüse (2), einer Reckstange (3) und einer Blasform (4) zum Aufnehmen eines Vorformlings, **gekennzeichnet durch** einen den Innenraum des Vorformlings ganz oder teilweise ausfüllenden Kolben (5),wobei die Reckstange (3), die Blasdüse (2) und der Kolben (5) an einer Blasstation angeordnet sind und der Kolben (5) an der Blasstation zum Einfahren in den Vorformling beweglich gelagert ist.

2. Blasmaschine nach Anspruch 1, **dadurch gekennzeichnet, dass** der Außendurchmesser des Kolbens (5) im Wesentlichen dem Hals-Innendurchmesser des Vorformlings entspricht.

3. Blasmaschine nach Anspruch 1 oder 2, **dadurch gekennzeichnet, dass** der Kolben (5) koaxial zur Blasdüse (2) angeordnet ist.

4. Blasmaschine nach einem der Ansprüche 1 bis 3, **dadurch gekennzeichnet, dass** der Kolben (5) unabhängig von der Blasdüse bewegbar ist.

5. Blasmaschine nach einem der Ansprüche 1 bis 4, **dadurch gekennzeichnet, dass** der Kolben koaxial zu einer Reckstange angeordnet ist und Blasform (3) umgibt.

6. Blasmaschine nach einem der Ansprüche 1 bis 5, **dadurch gekennzeichnet, dass** der Kolben (5) unabhängig von einer Reckstange (3) bewegbar ist.

7. Blasmaschine nach einem der Ansprüche 1 bis 6, **dadurch gekennzeichnet, dass** der Kolben (5) über eine Nockensteuerung gesteuert ist.

8. Verfahren zum Blasformen von Hohlkörpern, insbesondere Weithalsgefäßen, wobei ein Vorformling in eine die Reckstange eingesetzt und mit Hilfe von Blasluft unter Druck zum Hohlkörper verformt wird, **dadurch gekennzeichnet, dass** nach dem Beginn des Blasens ein Kolben (5) in den Vorformling eingefahren wird.

9. Verfahren nach Anspruch 8, **dadurch gekennzeichnet, dass** durch das Einfahren des Kolbens (5) die sich im Vorformling befindende Blasluft verdichtet wird.

10. Verfahren nach Anspruch 8 oder 9, **dadurch gekennzeichnet, dass** der Kolben (5) nach dem Erreichen einer ersten Blasdruckstufe eingefahren wird.

11. Verfahren nach einem der Ansprüche 8 bis 10, **dadurch gekennzeichnet, dass** durch das Einfahren des Kolbens (5) die sich im Vorformling befindende Luft auf einen zweiten, höheren Blasdruck verdichtet wird.

12. Verfahren nach einem der Ansprüche 8 bis 11, **dadurch gekennzeichnet, dass** beim Einfahren des Kolbens (5) zusätzlich Luft eingeblasen wird.

13. Verfahren nach einem der Ansprüche 8 bis 12, **dadurch gekennzeichnet, dass** der Kolben (5) nach Beendigung einer Einfahrbewegung einer Reckstange (3) eingefahren wird. "

## Claims

1. Blow moulder for manufacturing hollow bodies, in particular wide neck vessels, comprising a blow nozzle (2), a stretch rod (3) and a blow form (4) for receiving a preform, **characterised by** a piston (5) which fills out, wholly or partially, the interior of the preform, wherein the stretch rod (3), the blow nozzle (2) and the piston (5) are arranged on a blow station and the piston (5) is moveably supported on the blow station in order to be retracted into the preform.

2. Blow moulder according to Claim 1, **characterised in that** the outer diameter of the piston (5) substantially corresponds to the inner diameter of the neck of the preform.

3. Blow moulder according to Claim 1 or 2, **characterised in that** the piston (5) is arranged coaxially to the blow nozzle (2).

4. Blow moulder according to any one of Claims 1 to 3, **characterised in that** the piston (5) is moveable independently of the blow nozzle.

5. Blow moulder according to any one of Claims 1 to 4, **characterised in that** the piston is arranged coaxially to a stretch rod (3) and surrounds the stretch rod (3).

6. Blow moulder according to any one of Claims 1 to 5, **characterised in that** the piston (5) is moveable independently of a stretch rod (3).

7. Blow moulder according to any one of Claims 1 to 6, **characterised in that** the piston (5) is controlled via a cam controller.

8. Method for blow forming hollow bodies, in particular wide neck vessels, wherein a preform is inserted into a blow form and is deformed to a hollow body by means of blow air, **characterised in that** a piston (5) is retracted into the preform after blowing has commenced.

9. Method according to Claim 8, **characterised in that** the blow air located in the preform is compressed by retracting the piston (5).

10. Method according to Claim 8 or 9, **characterised in that** the piston (5) is retracted after a first blow pressure level has been reached.

11. Method according to any one of Claims 8 to 10, **characterised in that** the air located in the preform is compressed to a second, higher blow pressure by retracting the piston (5).

12. Method according to any one of Claims 8 to 11, **characterised in that** when the piston (5) is retracted, air is additionally blown in.

13. Method according to any one of Claims 8 to 12, **characterised in that** the piston (5) is retracted after a retracting movement of a stretch rod (3) has ended.

## Revendications

1. Souffleuse pour la fabrication de corps creux, en particulier de récipients à col large, comportant une buse de soufflage (2), une barre d'étirage (3) et une forme de soufflage (4) pour recevoir une préforme, **caractérisée par** un piston (5) qui remplit entièrement ou partiellement l'espace interne de la préforme, dans laquelle la barre d'étirage (3), la buse de soufflage (2) et le piston (5) sont agencés dans un poste de soufflage, et le piston (5) est monté de manière mobile dans le poste de soufflage pour pouvoir être introduit dans la préforme.

2. Souffleuse selon la revendication 1, **caractérisée en ce que** le diamètre externe du piston (5) correspond essentiellement au diamètre interne du col de la préforme.

3. Souffleuse selon la revendication 1 ou 2, **caractérisée en ce que** le piston (5) est agencé coaxialement par rapport à la buse de soufflage (2).

4. Souffleuse selon l'une des revendications 1 à 3, **caractérisée en ce que** le piston (5) peut se déplacer indépendamment de la buse de soufflage.

5. Souffleuse selon l'une des revendications 1 à 4, **caractérisée en ce que** le piston est agencé coaxialement par rapport à une barre d'étirage (3) et entoure la barre d'étirage (3).

6. Souffleuse selon l'une des revendications 1 à 5, **caractérisée en ce que** le piston (5) peut se déplacer indépendamment d'une barre d'étirage (3).

7. Souffleuse selon l'une des revendications 1 à 6, **caractérisée en ce que** le piston (5) est actionné par une commande à came.

8. Procédé de formage par soufflage de corps creux, en particulier de récipients à col large, dans lequel une préforme est placée dans une forme de soufflage et formée en un corps creux à l'aide d'air de soufflage sous pression, **caractérisé en ce qu'**un piston (5) est introduit dans la préforme après le début du soufflage.

9. Procédé selon la revendication 8, **caractérisé en ce que** l'air de soufflage qui se trouve dans la préforme est comprimé par l'introduction du piston (5).

10. Procédé selon la revendication 8 ou 9, **caractérisé en ce que** le piston (5) est introduit après avoir atteint un premier niveau de pression de soufflage.

11. Procédé selon l'une des revendications 8 à 10, **caractérisé en ce que** l'air qui se trouve dans la préforme est comprimé par l'introduction du piston (5) jusqu'à une deuxième pression de soufflage plus élevée.

12. Procédé selon l'une des revendications 8 à 11, **caractérisé en ce que** de l'air est en outre insufflé lors de l'introduction du piston (5).

13. Procédé selon l'une des revendications 8 à 12, **caractérisé en ce que** le piston (5) est introduit après la fin d'un mouvement d'introduction d'une barre d'étirage (3).
